# EUROPÄISCHE PATENTANMELDUNG

(11) **EP 3 120 914 A1**
(43) Veröffentlichungstag der Anmeldung: **25.01.2017**
(21) Anmeldenummer: 16180270.7
(22) Anmeldetag: 20.07.2016
(51) Int. Cl.: B01D 35/153, B01D 35/16, B01D 29/15

(54) **FILTEREINRICHTUNG**

(30) Priorität: 24.07.2015 DE 102015214068
(71) Anmelder: Mahle International GmbH, 70376 Stuttgart (DE)
(72) Erfinder: GENC, Engin, 71332 Waiblingen (DE); KIEMLEN, Ralf, 72760 Reutlingen (DE)
(74) Vertreter: BRP Renaud & Partner mbB Rechtsanwälte Patentanwälte Steuerberater

(57) **Zusammenfassung**

Die Erfindung betrifft eine Filtereinrichtung (1) mit
- einem Filtergehäuse (2) mit einem Leerlaufkanal (3),
- einem in dem Filtergehäuse (2) angeordneten Ringfilterelement (4). Erfindungswesentlich ist dabei,
- dass ein Pinträger (6) vorgesehen ist, der einen axial abstehenden und exzentrisch angeordneten Pin (7) aufweist,
- dass der Pinträger (6) drehbar zum Ringfilterelement (4) gelagert ist,
- dass eine Rampenkontur (8) mit einer Nut (9) vorgesehen ist,
- dass der Pinträger (6) ein Schwert (10) aufweist, welches auf der Rampenkontur (8) geführt ist und welches in montiertem Zustand in die Nut (9) der Rampenkontur (8) eingreift, wobei in diesem Fall der Pin (7) in den Leerlaufkanal (3) eingreift und diesen verschließt.

## Beschreibung

Die vorliegende Erfindung betrifft eine Filtereinrichtung mit einem Filtergehäuse mit einem Leerlaufkanal gemäß dem Oberbegriff des Anspruchs 1. Die Erfindung betrifft außerdem eine Brennkraftmaschine mit zumindest einer solchen Filtereinrichtung.

Aus der DE 10 2009 041 523 A1 ist eine gattungsgemäße Filtereinrichtung mit einem Filtergehäuse mit einem Leerlaufkanal sowie einem in dem Filtergehäuse angeordneten Ringfilterelement mit einem unterhalb des Ringfilterelements angeordneten Wassersammelraum/Schmutztopf bekannt. In dem Wassersammelraum bzw. am Schmutztopf ist ein abstehender, stutzenförmiger Pin vorgesehen, wobei ein Betrieb der Filtereinrichtung ausschließlich dann möglich ist, sofern dieser Pin in den im Filtergehäuse angeordneten Leerlaufkanal eingreift und diesen verschließt. Der Pin ist dabei fest am Schmutztopf fixiert.

Insbesondere bei komplexen Filtereinrichtungen mit einer großen Anzahl an Dichtstellen zwischen einem Ringfilterelement und einem Filtergehäuse, kann es für eine Drehbewegung des Ringfilterelements, welche bei einem exzentrischen Pin mit einer speziellen Führungskontur, insbesondere einer Rampe, notwendig ist, zu Problemen kommen, da der Reibwert zwischen dem Ringfilterelement und dem Filtergehäuse hoch ist. Wegen des hohen Reibwertes wird bei dieser Art von Ringfilterelementen gerne auch für die Demontage eine feste Verbindung, beispielsweise ein Bajonettverschluss zwischen dem Ringfilterelement und einem Filtergehäusedeckel eingesetzt, um über diesen das Ringfilterelement zuverlässig aus dem Filtergehäuse entfernen zu können. Soll jedoch eine derartige, drehfeste Verbindung zwischen dem Ringfilterelement und dem Filtergehäusedeckel zum Einsatz kommen, kann wiederum eine Fixierung des exzentrischen Pins am Ringfilterelement bzw. an dessen Schmutztopf nicht erfolgen, da dieser dann unter Umständen abgeschert werden würde.

Die vorliegende Erfindung beschäftigt sich daher mit dem Problem, für eine Filtereinrichtung der gattungsgemäßen Art eine verbesserte oder zumindest eine alternative Ausführungsform anzugeben, bei welcher zwischen einem Filtergehäuseteil und einem Ringfilterelement einerseits eine drehfeste Verbindung und andererseits trotzdem ein exzentrischer Pin verwendet werden kann.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen relativ zu einem Ringfilterelement einer Filtereinrichtung drehbaren Pin vorzusehen, so dass auf das Ringfilterelement beim Austausch an sich höhere Drehmomente ausgeübt werden können, welche insbesondere bei Filtereinrichtungen mit hohen Reibbeiwerten zwischen dem Ringfilterelement und einem Filtergehäuse, hervorgerufen durch eine große Anzahl an Dichtstellen, erforderlich sind. Die erfindungsgemäße Filtereinrichtung weist dabei in bekannter Weise ein Filtergehäuse mit einem Leerlaufkanal auf, wobei in diesem Filtergehäuse ein Ringfilterelement angeordnet ist. Erfindungsgemäß ist nun ein Pinträger vorgesehen, der den zuvor beschriebenen axial abstehenden und exzentrisch angeordneten Pin aufweist, wobei dieser Pinträger und damit auch der Pin drehbar zum Ringfilterelement gelagert sind. Zusätzlich vorgesehen ist eine Rampenkontur mit einer Nut, wobei der Pinträger ein komplementär zur Nut ausgebildetes Schwert aufweist, welches auf der Rampenkontur geführt ist und welches in montiertem Zustand in die Nut der Rampenkontur eingreift und in diesem Fall den Pin in den Leerlaufkanal einführt, so dass dieser den Leerlaufkanal verschließen kann. Somit ist es erstmals möglich, den Pin, nicht wie bei bisherigen aus dem Stand der Technik bekannten Ringfilterelementen fest an diesen zu fixieren, sondern drehbar zum Ringfilterelement zu lagern, wodurch beispielsweise zwischen einem ersten Filtergehäuseteil, insbesondere zwischen einem Filtergehäusedeckel und dem Ringfilterelement auch eine drehfeste Verbindung, beispielsweise ein Bajonettverschluss, eingesetzt werden kann, der einen Austausch des Ringfilterelements erleichtert. Von besonderem Vorteil hierbei ist jedoch, dass insbesondere bei komplexen Filtereinrichtungen mit einer hohen Anzahl an Dichtstellen die an diesen Dichtstellen auftretende Reibung mittels der drehfesten Verbindung des Ringfilterelements zum Filtergehäusedeckel problemlos überwunden werden kann. Eine derartige drehfeste Verbindung könnte bei einem fest mit dem Ringfilterelement verbundenen Pin nicht realisiert werden. Insbesondere bestünde hierbei sogar die Gefahr, dass bei einem Einführen des Pins und einem gleichzeitigen Weiterdrehen des Ringfilterelements der Pin abscheren würde. Dies alles kann mit der erfindungsgemäßen Filtereinrichtung vermieden werden.

Bei einer vorteilhaften Weiterbildung der erfindungsgemäßen Lösung ist der Pinträger ringförmig ausgebildet und besitzt ringförmig angeordnet und nach innen gerichtete Hakenkonturen, die in montiertem Zustand in eine Nut an einem Wassersammelraum/Schmutztopf, der üblicherweise unterhalb des Ringfilterelements angeordnet ist, eingreifen. Durch die Vielzahl nach innen gerichteter Hakenkonturen, die in der wassersammelraumseitigen Nut geführt sind, kann ein besonders leichtgängiges Verdrehen des Pinträgers und damit auch des Pins relativ zum Ringfilterelement erreicht werden, insbesondere aber kann auch ein Verkanten des Pinträgers relativ zum Ringfilterelement zuverlässig vermieden werden.

Zweckmäßig ist die Rampenkontur an einem Funktionsträger angeordnet. Die Rampenkontur, auf welcher das Schwert bis zum Erreichen der Nut entlang führt, kann dabei wahlweise im Filtergehäuse selbst vorgesehen werden, oder aber an einem Funktionsträger, der als kostengünstiges und qualitativ hochwertiges Kunststoffspritzgussteil innerhalb des Filtergehäuses angeordnet werden kann. Im Unterschied zu einer aus dem Stand der Technik bekannten Rampenkontur fährt bei dieser nicht der Pin selbst auf der Rampe entlang, sondern das Schwert, wobei dann auch an einem Ende der Rampenkontur nicht der Leerlaufkanal angeordnet ist, sondern die Nut, in welche das Schwert eingreift und über die dann der Pin in Axialrichtung in den Leerlaufkanal eingeführt werden kann. Der Pin selbst ist dabei relativ zum Schwert in einer vordefinierten Lage am Pinträger angeordnet, so dass beim Einfahren des Schwertes in die rampenkonturseitige Nut, der Pin fluchtend zum Leerlaufkanal positioniert ist.

Bei einer weiteren vorteilhaften Ausführungsform der erfindungsgemäßen Lösung weist der Pinträger eine zum Wassersammelraum/Schmutztopf komplementäre Form auf. Hierdurch ist es einerseits möglich, den Pinträger in der Art einer zweiten Haut und damit äußerst platzsparend über den Wassersammelraum/Schmutztopf zu legen und andererseits ermöglicht die gekrümmte Form des Pinträgers eine hohe Steifigkeit.

Bei einer alternativen Ausführungsform der erfindungsgemäßen Lösung ist der Pinträger ringförmig ausgebildet, wobei an einer Endscheibe des Ringfilterelements ringförmig angeordnete und nach außen gerichtete Hakenkonturen vorgesehen sind, die in montiertem Zustand den ringförmigen Pinträger hintergreifen. In diesem Fall ist der Pinträger vergleichsweise dünn und filigran ausgebildet, weist jedoch ebenfalls sowohl den Pin als auch das zugehörige Schwert auf, wobei das Schwert wiederum auf einer Funktionsträgerseitigen bzw. Filtergehäuse-seitigen Rampe entlang bis zu einer Nut läuft. Zweckmäßig ist die die Hakenkonturen aufweisende Endscheibe des Ringfilterelements einstückig mit einer Innenzarge ausgebildet, wodurch diese zusammen mit der Endscheibe kostengünstig, beispielsweise in einem Kunststoffspritzgussverfahren, hergestellt werden kann.

Bei einer wiederum alternativen Ausführungsform der erfindungsgemäßen Lösung weist der Pinträger eine einstückig mit diesem ausgebildete Innenzarge auf, wobei das Schwert an der Innenzarge angeordnet ist. Der Pinträger selbst weist zudem eine Scheibe auf, an welcher der Pin angeordnet ist und welche parallel zu einer unteren Endscheibe des Ringfilterelements angeordnet ist. In diesem Fall ist die zugehörige Rampenkontur beispielsweise an einem gehäuseseitigen Dom angeordnet, der in die Innenzarge des Ringfilterelements eingreift. Das an der Innenzarge angeordnete Schwert ist nach radial innen abstehend angeordnet und kann dadurch auf der domseitigen Rampenkontur geführt werden, bis es in die zugehörige Nut, die üblicherweise an der tiefsten Stelle der Rampenkontur angeordnet ist, eingreift. Auch in diesem Fall kann selbstverständlich die Innenzarge, die Scheibe und der gesamte Pinträger als einstückiges und kostengünstiges Kunststoffspritzgussteil ausgebildet sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße Filtereinrichtung bei einer ersten Ausführungsform,
- Fig. 2: eine Explosionsdarstellung der gemäß der Fig. 1 dargestellten Ausführungsform eines Pinträgers,
- Fig. 3: eine Darstellung ähnlich wie in Fig. 2, jedoch bei einer anderen Rampenkontur,
- Fig. 4: eine weitere mögliche Ausführungsform eines Funktionsträgers mit einer daran angeordneten Rampenkontur,
- Fig. 5: einen ringförmigen Pinträger mit Schwert und Pin, der über eine an einer Endscheibe angeordnete Hakenkontur drehbar gelagert ist,
- Fig. 6: die an der Endscheibe angeordnete Hakenkontur,
- Fig. 7: der gemäß der Fig. 5 dargestellte ringförmige Pinträger,
- Fig. 8: eine Schnittdarstellung durch eine erfindungsgemäße Filtereinrichtung mit einem gemäß den Fig. 5-8 dargestellten Pinträger,
- Fig. 9: einen weiteren Pinträger mit einer Innenzarge, an welcher das Schwert angeordnet ist,
- Fig. 10: eine Schnittdarstellung durch eine erfindungsgemäße Filtereinrichtung gemäß dem in Fig. 9 dargestellten Pinträger.

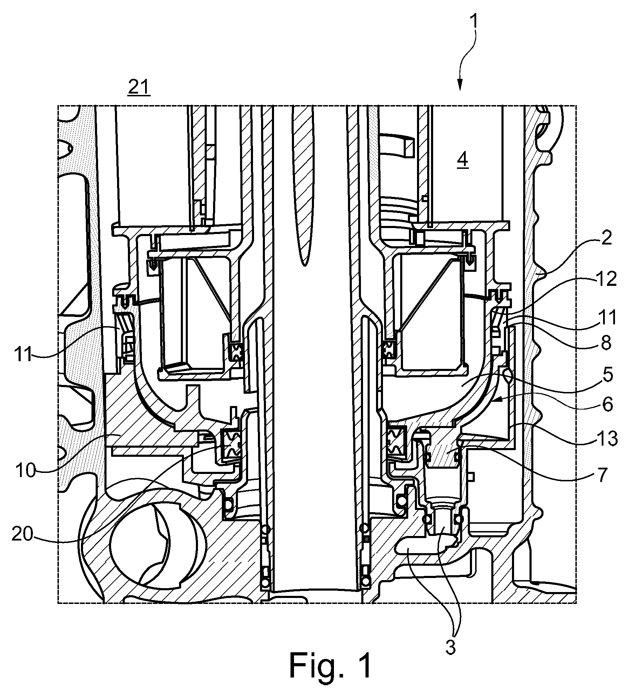

Entsprechend den Fig. 1 sowie 8 und 10, weist eine erfindungsgemäße Filtereinrichtung 1 ein Filtergehäuse 2 mit einem Leerlaufkanal 3 auf, wobei in dem Filtergehäuse 2 ein Ringfilterelement 4 angeordnet ist. Allen Ausführungsformen ist dabei gemein, dass ein Pinträger 6 vorgesehen ist, der einen axial abstehenden und exzentrisch angeordneten Pin aufweist und welcher direkt oder indirekt drehbar zum Ringfilterelement 4 gelagert ist. Unterhalb des Ringfilterelements 4 gemäß der Fig. 1 ist dabei ein Wassersammelraum/Schmutztopf 5 angeordnet. Ebenfalls vorgesehen in der erfindungsgemäßen Filtereinrichtung 1 ist bei allen Ausführungsformen eine Rampenkontur 8 mit einer zugehörigen Nut 9, wobei am Pinträger 6 ein Schwert 10 angeordnet ist, welches auf der Rampenkontur 8 geführt ist und welches im montiertem Zustand in die Nut 9 der Rampenkontur 8 eingreift, so dass in diesem Fall der Pin 7 den Leerlaufkanal 3 verschließt.

Mit der erfindungsgemäßen Filtereinrichtung 1 ist es somit erstmals möglich, diese beispielsweise über eine drehfeste Verbindung mit einem Filtergehäusedeckel zu verbinden und dadurch das Ringfilterelement 4 zusammen mit dem Filtergehäusedeckel zu verdrehen. Hierdurch kann insbesondere eine Montage bzw. Demontage des Ringfilterelements 4 bei einer Filtereinrichtung 1 mit einer Vielzahl an schwergängigen und mit einem hohen Reibbeiwert behafteten Dichtstellen 20 erreicht werden.

Betrachtet man nun die Fig. 1 bis 3, so kann man erkennen, dass der Pinträger 6 ringförmig ausgebildet ist und ringförmig angeordnete und nach innen gerichtete Hakenkonturen 11 aufweist, die in montiertem Zustand in eine Nut 12 an dem unterhalb des Ringfilterelements 4 angeordneten Wassersammelraum/Schmutztopf 5 eingreift. Die Nut 12 ist dabei als einfache ringförmige Vertiefung ausgebildet. Die Rampenkontur 8 ist in diesem Fall an einem Funktionsträger 13 angeordnet, der zusätzlich zum Ringfilterelement 4 in das Filtergehäuse 2 der Filtereinrichtung 1 eingesetzt wird und beispielsweise ebenso wie der Pinträger 6 aus Kunststoff, insbesondere sogar als einstückiges und kostengünstiges Kunststoffspritzgussteil ausgebildet ist.

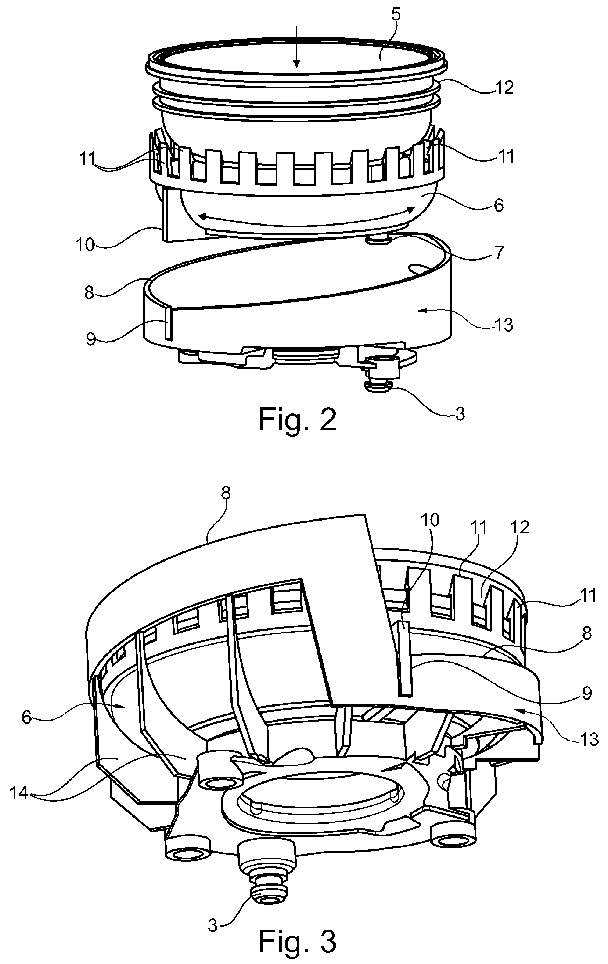

Betrachtet man die Fig. 1 und 2, so kann man erkennen, dass der Pinträger 6 eine zum Wassersammelraum/Schmutztopf 5 komplementäre Form aufweist und sich dadurch an diesen anschmiegt, wodurch einerseits wertvoller Bauraum eingespart und andererseits dem Pinträger 6 eine vergleichsweise hohe Steifigkeit zugewiesen werden kann.

Der Funktionsträger 13 gemäß der Fig. 3 besitzt darüber hinaus Aussteifungsrippen 14, die in Radialrichtung verlaufen und die die außerhalb eines Außenumfangs des Pinträgers 6 verlaufende Rampenkontur 8 halten. In diesem Falls steht das Schwert 10 des Pinträgers 6 radial nach außen ab. Die Ausgestaltung des Funktionsträgers 13 ist dabei bedarfsgerecht angepasst, wobei an der tiefsten Stelle der Rampenkontur 8 die Nut 9 angeordnet ist. Beim Erreichen der Nut 9 kann das Schwert 10 des Pinträgers 6 in Axialrichtung in diese einfahren, woraufhin der Pin 7, der in diesem Stadium fluchtend zum Leerlaufkanal 3 ausgerichtet ist, in diesen eingesteckt werden kann.

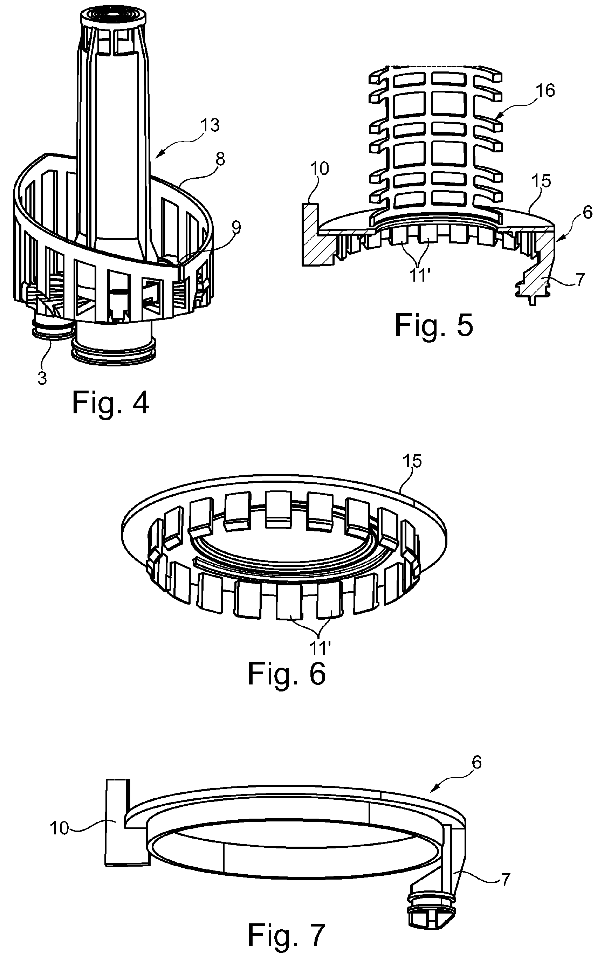

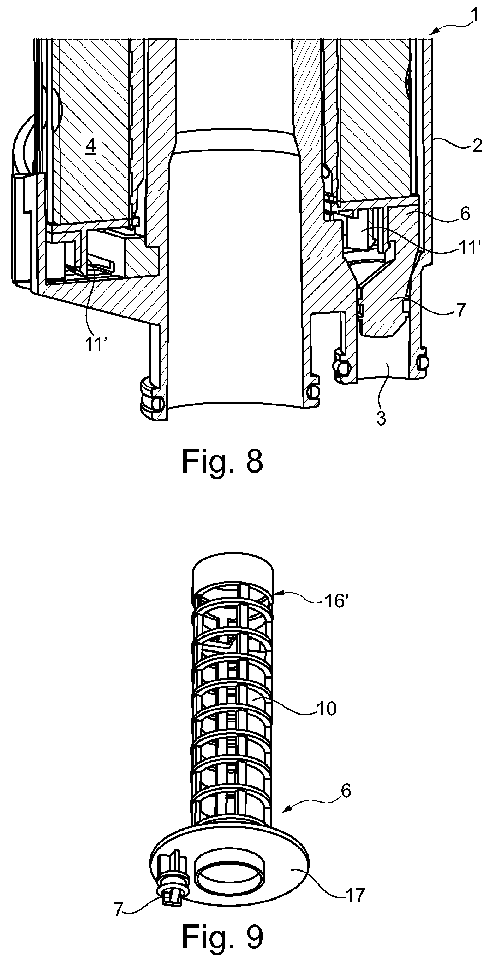

Betrachtet man die Ausführungsform gemäß den Fig. 4 bis 8, so kann man an diesen erkennen, dass der Pinträger 6 ebenfalls ringförmig ausgebildet ist, jedoch in diesem Fall tatsächlich lediglich in der Art eines Ringes ausgeführt ist. An einer Endscheibe 15 sind dabei ringförmig angeordnete und nach außen gerichtete Hakenkonturen 11' angeordnet, die in montiertem Zustand den ringförmigen Pinträger 6 hintergreifen, wie dies insbesondere aus der Fig. 8 zu entnehmen ist. Eine Montage des Pinträgers 6 an der Endscheibe 15 erfolgt dabei durch ein einfaches Aufschieben des Pinträgers 6, bis die Hakenkonturen 11' den Pinträger 6 hintergreifen.

Die die Hakenkonturen 11' aufweisende Endscheibe 15 ist dabei vorzugsweise einstückig mit einer Innenzarge 16 ausgebildet, wodurch eine kostengünstige und qualitativ hochwertige Herstellung möglich ist.

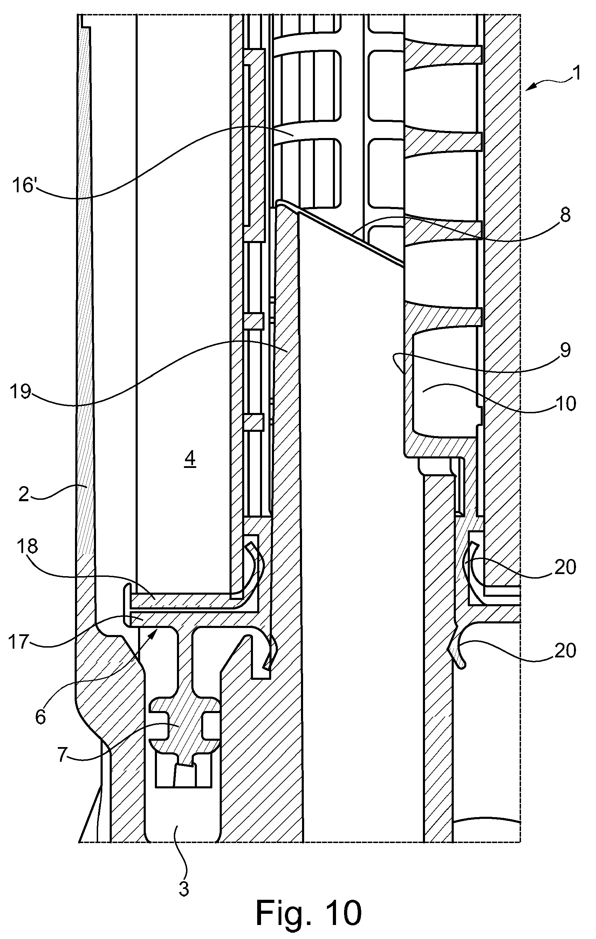

Bei der gemäß den Fig. 9 und 10 gezeigten und wiederum alternativen Ausführungsformen der erfindungsgemäßen Filtereinrichtung 1 ist der Pinträger 6 einstückig mit der Innenzarge 16' ausgebildet, wobei das Schwert 10 an der Innenzarge 16' angeordnet und radial nach innen gerichtet ist. Der Pinträger 6 selbst weist eine Scheibe 17 auf, an welcher der Pin 7 angeordnet ist und welche parallel zu einer unteren Endscheibe 18 des Ringfilterelements 4 angeordnet ist (vgl. Fig. 10). In diesem Fall ist die Rampenkontur 8 an einem in die Innenzarge 16' eingreifenden Dom 19 angeordnet, wobei eine Abdichtung zwischen dem Pinträger 6 und dem Dom 19 bzw. zwischen dem Ringfilterelement 4 und dem Pinträger 6 beispielsweise über entsprechende Dichtungen 20, insbesondere Dichtlippen oder Vliesdichtungen, erfolgen kann.

Unabhängig von der gewählten Ausführungsform der erfindungsgemäßen Filtereinrichtung 1 ermöglicht diese somit erstmals auch bei einer hohen Anzahl von Dichtstellen 20 mit entsprechend hohen Reibbeiwerten, die Verwendung einer drehfesten Verbindung des Ringfilterelements 4 mit einem nicht gezeigten Filtergehäusedeckel, da der üblicherweise bislang fest am Ringfilterelement 4 angeordnete Pin 7 nun relativ zu diesem verdrehbar gelagert ist. Hierdurch kann insbesondere eine hohe und die Reibbeiwerte überwindende Kraft über den Filtergehäusedeckel auf das Ringfilterelement 4 ausgeübt werden, ohne dass bei einem in den Leerlaufkanal 3 eingefahrenen Pin 7 befürchtet werden muss, dass dieser abschert. Die Filtereinrichtung 1 kann dabei beispielsweise bei einer Brennkraftmaschine 21 eingesetzt werden.

## Patentansprüche

1. Filtereinrichtung (1) mit
- einem Filtergehäuse (2) mit einem Leerlaufkanal (3),
- einem in dem Filtergehäuse (2) angeordneten Ringfilterelement (4),
**dadurch gekennzeichnet,**
- **dass** ein Pinträger (6) vorgesehen ist, der einen axial abstehenden und exzentrisch angeordneten Pin (7) aufweist,
- **dass** der Pinträger (6) drehbar zum Ringfilterelement (4) gelagert ist,
- **dass** eine Rampenkontur (8) mit einer Nut (9) vorgesehen ist,
- **dass** der Pinträger (6) ein Schwert (10) aufweist, welches auf der Rampenkontur (8) geführt ist und welches in montiertem Zustand in die Nut (9) der Rampenkontur (8) eingreift, wobei in diesem Fall der Pin (7) in den Leerlaufkanal (3) eingreift und diesen verschließt.

2. Filtereinrichtung nach Anspruch 1,
**dadurch gekennzeichnet,**
**dass** der Pinträger (6) ringförmig ausgebildet ist und ringförmig angeordnete und nach innen gerichtete Hakenkonturen (11) aufweist, die in montiertem Zustand in eine Nut (12) an einem unterhalb des Ringfilterelements (4) angeordneten Wassersammelraum/Schmutztopf (5) eingreifen.

3. Filtereinrichtung nach Anspruch 1 oder 2,
**dadurch gekennzeichnet,**
**dass** die Rampenkontur (8) an einem Funktionsträger (13) angeordnet ist.

4. Filtereinrichtung nach Anspruch 2 oder 3,
**dadurch gekennzeichnet,**
**dass** der Pinträger (6) eine zum Wassersammelraum/Schmutztopf (5) komplementäre Form aufweist.

5. Filtereinrichtung nach Anspruch 1,
**dadurch gekennzeichnet,**
- **dass** der Pinträger (6) ringförmig ausgebildet ist,
- **dass** an einer Endscheibe (15) des Ringfilterelements (4) ringförmig angeordnete und nach außen gerichtete Hakenkonturen (11') vorgesehen sind, aufweist, die in montiertem Zustand den ringförmigen Pinträger (6) hintergreifen.

6. Filtereinrichtung nach Anspruch 5,
**dadurch gekennzeichnet,**
**dass** die die Hakenkonturen (11') aufweisende Endscheibe (15) einstückig mit einer Innenzarge (16) ausgebildet ist.

7. Filtereinrichtung nach Anspruch 1,
**dadurch gekennzeichnet,**
- **dass** der Pinträger (6) einstückig mit einer Innenzarge (16') ausgebildet ist, wobei das Schwert (10) an der Innenzarge (16') angeordnet ist,
- **dass** der Pinträger (6) eine Scheibe (17) aufweist, an welcher der Pin (7) angeordnet ist und welche parallel zu einer unteren Endscheibe (18) des Ringfilterelements (4) angeordnet ist.

8. Filtereinrichtung nach einem der Ansprüche 1 bis 7,
**dadurch gekennzeichnet,**
**dass** der Pinträger (6) als, insbesondere einstückiges, Kunststoffspritzgussteil ausgebildet ist.

9. Filtereinrichtung nach einem der Ansprüche 4 bis 8,
**dadurch gekennzeichnet,**
**dass** der Funktionsträger (13) als, insbesondere einstückiges, Kunststoffspritzgussteil ausgebildet ist.

10. Filtereinrichtung nach einem der Ansprüche 1 bis 9,
**dadurch gekennzeichnet,**
**dass** die Filtereinrichtung (1) als Kraftstofffilter, als Ölfilter oder als Hydraulikfilter ausgebildet ist.

11. Brennkraftmaschine (21) mit einer Filtereinrichtung (1), insbesondere mit einem Kraftstofffilter, nach einem der Ansprüche 1 bis 10.
